# EUROPEAN PATENT APPLICATION

(11) **EP 4 797 205 A1**
(43) Date of publication of application: **26.08.2026**
(21) Application number: 25158967.7
(22) Date of filing: 19.02.2025
(51) Int. Cl.: G06T 7/246, G06T 13/40

(54) **METHODS FOR TRACKING A FACIAL EXPRESSION**

(71) Applicant: TOYOTA JIDOSHA KABUSHIKI KAISHA, Toyota-shi, Aichi-ken, 471-8571 (JP)
(72) Inventor: GARATTONI, Lorenzo, 1140 BRUSSELS (BE); DAVOLI, Davide, 1140 BRUSSELS (BE); SCHONEVELD, Liam, TOKYO, 103-0022 (JP); CHEN, Zhe, TOKYO, 103-0022 (JP)
(74) Representative: Cabinet Beau de Loménie

(57) **Abstract**

A computer-implemented method for tracking a facial expression of a subject in a series of images comprising: (S10) generating a mesh of the subject from a 3D parametric morphable model conditioned by tracking parameters representative of a facial expression of the subject; (S20) generating a rendered image of the subject based on the mesh using a differentiable renderer; wherein the differentiable renderer is associating 3D geometric primitives to the mesh of the subject using predetermined renderer parameters; (S30) computing a photometric loss term evaluating differences between the rendered image and a ground-truth image of the subject extracted from the series of images; and (S40) optimizing the tracking parameters and the renderer parameters of the 3D parametric morphable model using the photometric loss.

## Description

### 1. Field of the Invention

The invention relates to the field of 3D model reconstruction. In particular, the invention relates to methods for tracking a facial expression of a subject in a series of images based on the detection of parameters of a 3D parametric morphable model.

### 2. Description of Related Art

The detection and tracking of parameters of parametric morphable representation of a subject is an important challenge in a vast variety of tasks and applications such as reconstruction of 3D representation of a subject, expression-transfer, and 3D representation re-enactment.

In this context, it is generally useful to track deformations of the geometry of the 3D parametric representation of a subject. Some methods utilize a frame-by-frame optimization strategy to align a textured mesh extracted from the 3D parametric model with the input images of a video (see [REF 1]-[REF 3]). Further, some methods are based on the use of neural networks to predict parameters of the 3D parametric model representing the subject (see [REF 4] & [REF 5]).

However, these methods rely on differentiable mesh rendering in order to render images from the mesh and to compute an optimization loss. While this approach can normally provide decent alignment in the facial regions, they struggle to capture fine-grained details in images of the subject (that are useful for expression tracking). They also have limited performance when attempting to provide good torso alignment and to decouple torso and neck rotation.

Alternatively, methods based on "PhysAvatars" models (see [REF 6]) require a large number of cameras to initialize a highly detailed mesh.

The following references disclose various methods relating to 3D image reconstruction.
[REF 1] GRASSAL, Philip-William, PRINZLER, Malte, LEISTNER, Titus, et al. Neural head avatars from monocular rgb videos. In : Proceedings of the IEEE/CVF Conference on Computer Vision and Pattern Recognition. 2022. p. 18653-18664.
[REF 2] ZIELONKA, Wojciech, BOLKART, Timo, et THIES, Justus. Towards metrical reconstruction of human faces. In : European conference on computer vision. Cham : Springer Nature Switzerland, 2022. p. 250-269.
[REF 3] QIAN, Shenhan, KIRSCHSTEIN, Tobias, SCHONEVELD, Liam, et al. Gaussianavatars: Photorealistic head avatars with rigged 3d gaussians. In : Proceedings of the IEEE/CVF Conference on Computer Vision and Pattern Recognition. 2024. p. 20299-20309.
[REF 4] FENG, Yao, FENG, Haiwen, BLACK, Michael J., et al. Learning an animatable detailed 3D face model from in-the-wild images. ACM Transactions on Graphics (ToG), 2021, vol. 40, no 4, p. 1-13.
[REF 5] DANĚČEK, Radek, BLACK, Michael J., et BOLKART, Timo. Emoca: Emotion driven monocular face capture and animation. In : Proceedings of the IEEE/CVF Conference on Computer Vision and Pattern Recognition. 2022. p. 20311-20322.
[REF 6] LI, Tianye, BOLKART, Timo, BLACK, Michael J., et al. Learning a model of facial shape and expression from 4D scans. ACM Trans. Graph., 2017, vol. 36, no 6, p. 194:1-194:17.
[REF 7] WANG, Zhou, BOVIK, Alan C., SHEIKH, Hamid R., et al. Image quality assessment: from error visibility to structural similarity. IEEE transactions on image processing, 2004, vol. 13, no 4, p. 600-612.

### SUMMARY OF THE INVENTION

According to aspects of the present disclosure, a computer-implemented method for tracking a facial expression of a subject in a series of images is provided. The method comprises:
- generating a mesh of the subject from a 3D parametric morphable model conditioned by tracking parameters representative of a facial expression of the subject;
- generating a rendered image of the subject based on the mesh using a differentiable renderer; wherein the differentiable renderer is associating 3D geometric primitives to the mesh of the subject using predetermined renderer parameters;
- computing a photometric loss term evaluating differences between the rendered image and a ground-truth image of the subject extracted from the series of images; and
- optimizing the tracking parameters and the renderer parameters of the 3D parametric morphable model using the photometric loss.

In the present description, the 3D parametric morphable model is a 3D representation of the subject that can be adjusted to reproduce any expression and pose of the subject. The 3D parametric morphable model is parametrized by an ensemble of parameters (tracking parameters) that the present method is configured for tracking.

In the present description, the 3D parametric model, such as a Face Linear Animation Model (FLAME) as defined in [REF 6], is a triangle mesh composed of triangular faces. In particular, each face of the mesh is a triangle connecting three vertices of the mesh together. The mesh vertices can be deformed using the FLAME parameters such as shape, expressions and pose parameters (for example global rotation or torso pose, neck pose eyeball pose and jaw pose).

With the present method, it is in particular possible to track an expression of a subject represented in an image by fitting a 3D parametric morphable model in a video leveraging 3D geometric primitives and their rendering to properly capture both geometry and appearance of the subject consistently. In particular, the tracking parameters can then be used to reconstruct and animate an 3D representation of a subject; for example an avatar, based on the 3D parametric morphable model.

Advantageously, by virtue of the use of 3D geometric primitives associated to the 3D parametric model, it is possible to capture precise photometric information on the subject, even information that exceeds the mesh, such as hair and clothes, and can thereby allow for adapting the mesh to model fine details of the subject. This is particularly beneficial compared to methods of the prior art merely based on mesh renderers which are only able to capture information overlapping with the mesh (see for example [REF 1]-[REF 3]). The present method also outperforms methods relying on neural networks to predict parameters of a 3D parametric morphable model (see for example [REF 4] & [REF 5]) which provide less accurate tracking results. The present iterative Gaussian optimization procedure also allows for fitting a model to novel poses and/or novel expressions that are not present in the series of images used for initialization.

Further, the present method is advantageous compared to methods requiring a highly detailed initial mesh. In particular, the method disclosed in [REF 6] does not utilize a 3D parametric morphable model and thereby cannot optimize the positions of the 3D geometric primitives.

According to embodiments, the series of images is a monocular video. The present method is particularly advantageous to track a facial expression from monocular images of a subject as a high level of details can be extracted from the input images.

According to embodiments, the tracking parameters comprise: shape of the subject, expression of the subject, pose of the neck, pose of the jaw, pose of the eyeballs, global rotation of the mesh, and global translation of the mesh.

According to embodiments, the 3D primitives that are associated to the mesh of the subject are Gaussian primitives that are attached to each triangular face of the mesh.

According to embodiments, the tracking parameters are initialized in order to align the mesh with the subject within one or more images of the series of images.

According to embodiments, the renderer parameters are initialized so that the colors of the rendered image align with one or more images of the series of images.

According to embodiments, the renderer parameters comprise base colors of the faces of the mesh, wherein such colors are initialized manually by assigning a base category with a predetermined base color to each face of the mesh. Advantageously, the initialization of the base colors of the mesh before the optimization of the Gaussian colors allows for achieving a more constrained representation that is less prone to overfitting to the input images. Further, this procedure allows for properly updating the geometry of the subject during the optimization of the Gaussians, thereby enhancing the capture of the appearance of the subject.

According to embodiments, the renderer parameters comprise colors of the 3D Geometric primitives.

According to embodiments, the renderer parameters comprise scale of the 3D geometric primitives, wherein such scale is defined as a 3D vector comprising a component representative of a scale in a normal direction on the mesh.

According to embodiments, the renderer parameters comprise position offset and rotation of the 3D geometric geometric primitives, wherein such position offset and rotation are initialized in the center of the faces of the mesh.

According to embodiments, the step of optimizing the tracking parameters of the 3D parametric morphable model using the photometric loss is performed sequentially, wherein, for each frame of the series of images, the parameters of the mesh are optimized prior to the renderer parameters of the 3D geometric primitives.

The present disclosure is further related to a device for tracking a facial expression of a subject in a series of images, the device comprising a processor configured to implement steps of the above method.

The present disclosure is further related to a computer program set including instructions for executing the steps of the above method when said program set is executed by at least one computer. This program set can use any programming language and take the form of source code, object code or a code intermediate between source code and object code, such as a partially compiled form, or any other desirable form.

The present disclosure is further related to a recording medium readable by at least one computer and having recorded thereon a computer program including instructions for executing the steps of the above method. The recording medium can be any entity or device capable of storing the program. For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; and magneto-optical disks.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram representing aspects of a method according to the present disclosure;
FIG. 2 is a block diagram of a method according to embodiments of the present disclosure;
FIGS. 3A-3F are charts illustrating advantages of the method according to the present disclosure over other methods.

### DETAILED DESCRIPTION OF EMBODIMENTS

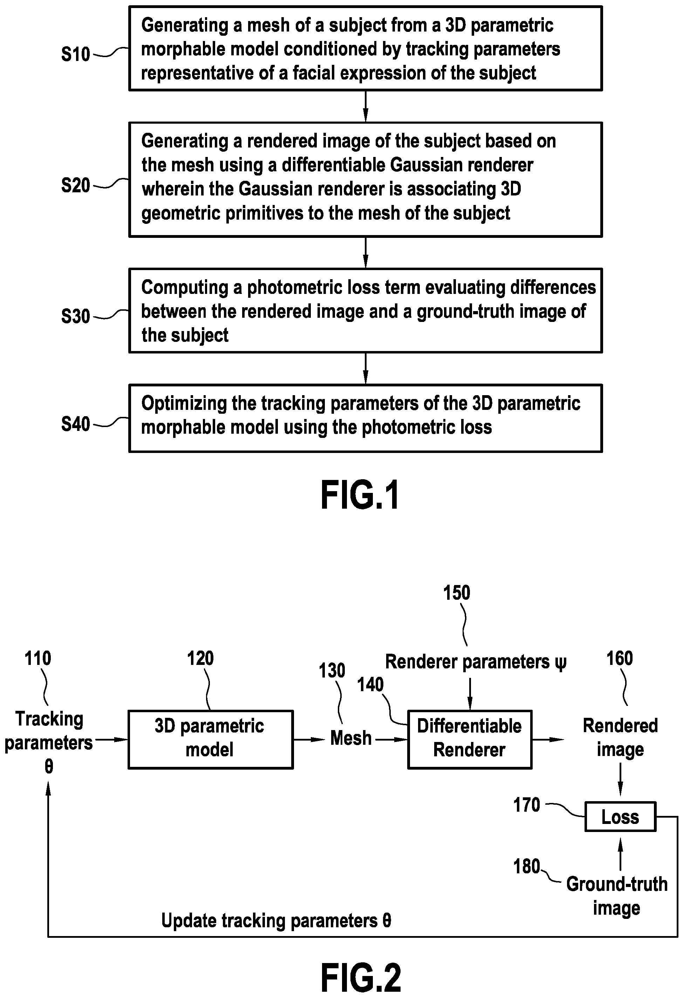

Methods and systems for tracking a facial expression of a subject in a series of images of a subject, which constitute exemplary embodiments of the present disclosure, are now going to be presented in relation with FIGS.1-3.

FIGS. 1-2 show aspects of a method for tracking a facial expression of a subject according to the present disclosure.

The present method is aimed at tracking a facial expression of a subject, which implies the fact of obtaining parameters of a 3D model that reproduce the facial expression of the subject in a series of images. In other words, the geometry of a mesh is adjusted to precisely correspond to the expression of the subject in the images and to the orientation of the subject such as neck rotation and torso rotation. In particular, the method uses 3D geometric primitives attached to the mesh to capture detailed information from the images in order to better track the facial expression of the subject.

In a first step S10, a mesh 130 of a subject represented in a series of images is generated from a 3D parametric morphable model 120, such as the FLAME algorithm. The algorithm 120 is conditioned by tracking parameters 110 representative of a facial expression of a subject. Before the optimization, the tracking parameters 110 may be initialized to initial values, for example initial values derived from one or more images from the series of images. The series of images may form a monocular videos taken form a single view or a multi-view video taken from multiple viewpoints. The images of the video represent at least a partial view of a subject including the head of the subject.

In a second step S20, a rendered image 160 of the subject is generated based on the mesh 130 by using a differentiable renderer 140 parametrized by renderer parameters 150. The differential renderer 140 is associating 3D geometric primitives to the mesh of the subject.

In embodiments, the 3D geometric primitives are Gaussians. In particular, Gaussians are attached to the faces of the mesh using, for example an algorithm derived from GaussianAvatars (see [REF 3]). The Gaussians attached to the mesh by the differentiable renderer 140 are defined by a set of renderer parameters 150 comprising, for example, position offset, rotation and scale. Such renderer parameters 150 are defined for each Gaussian with respect to each face of the mesh 130.

By contrast to the GaussianAvatars algorithm, the scale of the Gaussian may be defined as a 3D vector comprising a component representative of a scale in a normal direction on the mesh.

In the GaussianAvatars algorithm, the scale associated to each face of the mesh is a scalar factor which is shared across all spatial dimensions (x,y,z). By contrast, in embodiments of the present method, the scale is defined as a 3D vector, wherein, for example: sx is the length of the base of the triangle of a face of the mesh, sz is the height of the triangle and sy, which represent the normal direction to the triangle, is set to an particularly low value so that the 3D Gaussian is well aligned with its parent triangular face. For example, dimensions of the scale vector may obey the following relation: *s_{y}* = 0.1 * min(*sₓ*,*s_{z}*).

In step S30, a photometric loss 170 is computed by evaluating differences between the rendered image 160 obtained from the differentiable renderer 140, which combines the structure of the mesh with the texture of the Gaussians, with a ground-truth image 180. The ground-truth image 180 may be an image of the series of images from which the facial expression is to be tracked. Further, the ground-truth image may also be an image derived from several images of such a series of images.

In step S40, the tracking parameters 110 and the renderer parameters 150 are optimized iteratively using the photometric loss 170. In particular, the optimization process is performed so that the rendered image 160 progressively aligns with one of more of the ground-truth images 180 from which the facial expression of the subject is to be tracked. During the optimization process, both the geometry of the mesh and the appearance of the mesh rigged with Gaussians is optimized so that the facial expression from the ground-truth image is tracked and reproduced.

The fact of using 3D geometric primitives such as Gaussians during the optimization allows for computing a more precise photometric loss term to optimize the 3D morphable model, thereby enhancing the optimization process (for example by avoiding sub-optimal solutions related to optimization local minima). In particular, the finer details captured through the use of Gaussian primitives impose stronger constraints on the RGB information to converge towards the input image.

In embodiments, during the optimization, the Gaussians can be densified to improve the fidelity of the representation and enhance the capture of fine-grained details in the series of images.

Before the optimization procedure, the parameters are initialized. The initialization may be performed using several frames from the series of input images or, interestingly, only a single frame from the series of images representing the subject.

The initialization may comprise a rigid alignment of the mesh (in translation and in rotation) with respect to the subject in the image used for initialization, possibly using landmarks.

The initialization may further comprise an alignment of the parameters of the mesh (for example FLAME parameters of a FLAME model). The parameters of the mesh model may comprise: a shape of the subject, expression of the subject, a pose of the neck, a pose of the jaw, a pose of the eyeballs, a global rotation of the mesh, and a global translation of the mesh.

The initialization may further comprise an initialization of the base colors of the mesh, i.e. the color of the triangular faces of the mesh. Such base color initialization may comprise an initialization of several parameters such as base color and static offsets.

In embodiments, the colors of the faces of the mesh are initialized by assigning a base color to each category of the head that is represented. For example, each face of the mesh is assigned with a category and a default color of the category will then be assigned to the mesh. The base categories may comprise: skin, boundary, lips, hair, irises, sclerae, and teeth. The assignation may be performed manually or can be implemented through the use of segmentation methods that are known in the field. This procedure provides a way to have some default color for different parts of the face of the subject (such as skin, eyes or teeth). Such base colors (for example the default color for the skin may be defined as pinkish) are then optimized to match the subject (for example the skin color will adapt to the input subject and similarly for hair, irises, clothes, lips).

The initialization may also comprise an initialization of the renderer parameters, for example the parameters of the 3D geometric primitives that are associated to the mesh. In the case of a Gaussian primitives, the renderer parameters may in particular comprise: position offset of the Gaussians, rotation of the Gaussians, color of the Gaussians, and shape of the Gaussians.

After the renderer parameters and the tracking parameters are initialized, such tracking parameters and renderer parameters are optimized using the photometric loss term. In embodiments, the optimization is sequentially computed for every frames.

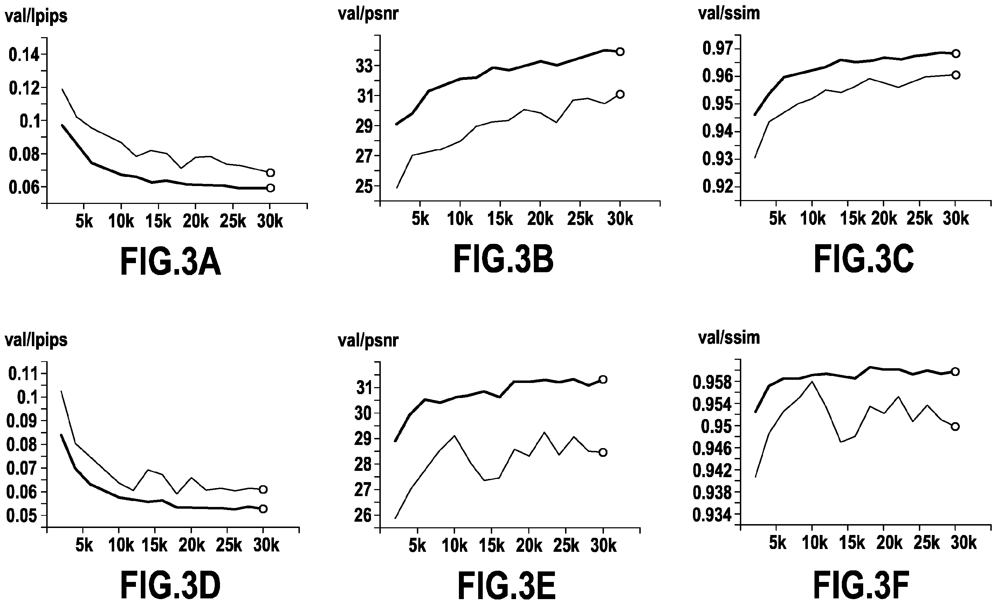

Figs.3A-3F illustrates performance of the present method (bold line) compared to a method of the prior art (fine line). The method of the prior art to which the present method is compared is the VHAP method as disclosed in [REF 3].

The metrics used to compare performance of the methods are: Learned Perceptual Image Patch (lpips); Peak Signal-to-Noise Ratio (psnr); and Structural Similarity Index Measure (ssim). Such metrics, which assess the quality of a 3D rendering compared to a ground-truth image, are known in the field of 3D reconstruction (see, for example, [REF 7]).

Figs.3A-3C illustrate performance when addressing a task aiming at reconstructing a 3D representation of a head of a subject, *ab initio,* after having tracked FLAME parameters using the present method (or the VHAP method). Therefore, it is an evaluation of the precision of the tracked parameters when used to reconstruct a faithful 3D representation of the subject.

Figs.3D-3F illustrate performances of the method when addressing a task aiming at reconstructing a 3D avatar of a head of a subject under a known view (present in the input video) but with a novel expression (that is not known).

In order to obtain the exemplary results presented in Figs.3A-3F, the methods under evaluation are first used to track the parameters of a 3D parametric model corresponding to a subject observed in a series of images. Once the tracking parameters are obtained, such parameters are used to reconstruct a 3D representation of the subject and animate this representation so that it adopts a desired pose or expression, possibly different from what is observed in the input images, is obtained.

Results shown in FIGS. 3A-3F show that the present method surpasses the method of the prior art across all the evaluated metrics.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method for tracking a facial expression of a subject in a series of images comprising:
- (S10) generating a mesh of the subject from a 3D parametric morphable model conditioned by tracking parameters representative of a facial expression of the subject;
- (S20) generating a rendered image of the subject based on the mesh using a differentiable renderer; wherein the differentiable renderer is associating 3D geometric primitives to the mesh of the subject using predetermined renderer parameters;
- (S30) computing a photometric loss term evaluating differences between the rendered image and a ground-truth image of the subject extracted from the series of images; and
- (S40) optimizing the tracking parameters and the renderer parameters of the 3D parametric morphable model using the photometric loss.

2. The method of claim 1, wherein the series of images is a monocular video.

3. The method of claim 2, wherein the tracking parameters comprise: shape of the subject, expression of the subject, pose of the neck, pose of the jaw, pose of the eyeballs, global rotation of the mesh, and global translation of the mesh.

4. The method of any of claims 1 to 3, wherein the 3D primitives that are associated to the mesh of the subject are Gaussian primitives that are attached to each triangular face of the mesh.

5. The method of any of claims 1 to 4, wherein the tracking parameters are initialized in order to align the mesh with the subject within one or more images of the series of images.

6. The method of any of claims 1 to 5, wherein the renderer parameters are initialized so that the colors of the rendered image align with one or more images of the series of images.

7. The method of any of claims 1 to 6, wherein the renderer parameters comprise base colors of the faces of the mesh, wherein such colors are initialized manually by assigning a base category with a predetermined base color to each face of the mesh.

8. The method of any of claims 6 to 7, wherein the renderer parameters comprise colors of the 3D Geometric primitives.

9. The method of any of claims 6 to 8, wherein the renderer parameters comprise scale of the 3D geometric primitives, wherein such scale is defined as a 3D vector comprising a component representative of a scale in a normal direction on the mesh.

10. The method of any of claims 6 to 9, wherein the renderer parameters comprise position offset and rotation of the 3D geometric primitives, wherein such position offset and rotation are initialized in the center of the faces of the mesh.

11. The method of any of claims 1 to 10, wherein the step (S40) of optimizing the tracking parameters of the 3D parametric morphable model using the photometric loss is performed sequentially, wherein, for each frame of the series of images, the parameters of the mesh are optimized prior to the renderer parameters of the 3D geometric primitives.

12. A device for tracking a facial expression of a subject in a series of images, the device comprising a processor configured to implement steps of the method according to any one of claims 1 to 11.

13. A computer program set including instructions for executing the steps of the method according to any of claims 1 to 11 when said program set is executed by at least one computer.

14. A recording medium readable by a computer and having recorded thereon a computer program including instructions for executing the steps of the method according to any of claims 1 to 11.

## Amended claims

### Amended claims in accordance with Rule 137(2) EPC.

1. A computer-implemented method for tracking a facial expression of a subject in a series of images comprising:
- (S10) generating a mesh of the subject from a 3D parametric morphable model conditioned by tracking parameters representative of a facial expression of the subject;
- (S20) generating a rendered image of the subject based on the mesh using a differentiable renderer; wherein the differentiable renderer is associating 3D geometric primitives to the mesh of the subject using predetermined renderer parameters;
- (S30) computing a photometric loss term evaluating differences between the rendered image and a ground-truth image of the subject extracted from the series of images; and
- (S40) optimizing the tracking parameters and the renderer parameters of the 3D parametric morphable model using the photometric loss;
**characterized in that**:
the tracking parameters comprise: shape of the subject, expression of the subject, pose of the neck, pose of the jaw, pose of the eyeballs, global rotation of the mesh, and global translation of the mesh; and
the tracking parameters are initialized in order to align the mesh with the subject within one or more images of the series of images.

2. The method of claim 1, wherein the series of images is a monocular video.

3. The method of any of claims 1 to 2, wherein the 3D primitives that are associated to the mesh of the subject are Gaussian primitives that are attached to each triangular face of the mesh.

4. The method of any of claims 1 to 3, wherein the renderer parameters are initialized so that the colors of the rendered image align with one or more images of the series of images.

5. The method of any of claims 1 to 4, wherein the renderer parameters comprise base colors of the faces of the mesh, wherein such colors are initialized manually by assigning a base category with a predetermined base color to each face of the mesh.

6. The method of any of claims 4 to 5, wherein the renderer parameters comprise colors of the 3D Geometric primitives.

7. The method of any of claims 4 to 6, wherein the renderer parameters comprise scale of the 3D geometric primitives, wherein such scale is defined as a 3D vector comprising a component representative of a scale in a normal direction on the mesh.

8. The method of any of claims 4 to 7, wherein the renderer parameters comprise position offset and rotation of the 3D geometric primitives, wherein such position offset and rotation are initialized in the center of the faces of the mesh.

9. The method of any of claims 1 to 8, wherein the step (S40) of optimizing the tracking parameters of the 3D parametric morphable model using the photometric loss is performed sequentially, wherein, for each frame of the series of images, the parameters of the mesh are optimized prior to the renderer parameters of the 3D geometric primitives.

10. A device for tracking a facial expression of a subject in a series of images, the device comprising a processor configured to implement steps of the method according to any one of claims 1 to 9.

11. A computer program set including instructions for executing the steps of the method according to any of claims 1 to 9 when said program set is executed by at least one computer.

12. A recording medium readable by a computer and having recorded thereon a computer program including instructions for executing the steps of the method according to any of claims 1 to 9.
